# FASCICULE DE BREVET EUROPEEN

(11) **EP 0 997 255 B1**
(45) Date de publication et mention de la délivrance du brevet: **29.01.2003**
(21) Numéro de dépôt: 99402406.5
(22) Date de dépôt: 01.10.1999
(51) Int. Cl.: B29C 44/04, B29C 44/02

(54) **Procédé de moulage de matelassures, matelassure telle qu'obtenue par le procédé, et siège comprenant une telle matelassure**
Verfahren zum Formen von Kissen, durch das Verfahren herstellbares Kissen, und ein solches Kissen enthaltender Sitz
Process of moulding cushions, cushion obtainable by the process, and seat comprising such cushion

(30) Priorité: 05.10.1998 FR 9812436
(43) Date de publication de la demande: 03.05.2000
(73) Titulaire: FAURECIA SIEGES D'AUTOMOBILE S.A., 92100 Boulogne-Billancourt (FR)
(72) Inventeur: Vu Khac, Tham, 91150 Etampes (FR)
(74) Mandataire: Burbaud, Eric

(56) Documents cités:
- WO-A-93/23237
- DE-A- 2 035 489

## Description

La présente invention est relative à un procédé de fabrication de matelassures, destinées notamment à être installées sur des structures pour sièges de véhicule automobile.

De telles matelassures sont généralement constituées de deux ou plusieurs couches de mousse ayant des caractéristiques de souplesse différentes afin d'assurer un bon confort aux passagers des sièges équipés avec ces matelassures.

On connaît, notamment d'après le document FR-A-2 607 061, des procédés de fabrication de matelassures qui consistent à injecter successivement plusieurs mousses de souplesses différentes dans un moule. Les mousses sont injectées l'une sur l'autre sans être séparées. Ce procédé présente l'inconvénient de mal maîtriser la répartition des couches de mousse dans le moule et en conséquence, d'obtenir une matelassure dont les différentes parties possèdent une souplesse inadaptée au confort du passager.

Par ailleurs, le document FR-A-2 722 726 décrit un procédé de fabrication de matelassures dans lequel on injecte successivement des mousses de souplesses différentes dans un moule, ces mousses étant séparées par un élément articulé. Même si ce procédé donne entière satisfaction pour obtenir une matelassure assurant un bon confort au passager, il est onéreux et présente des risques de déchirement de la mousse lors du moulage.

La présente invention a pour but de remédier aux inconvénients précités en fournissant un procédé de fabrication d'une matelassure possédant plusieurs couches de mousses de souplesses différentes, en une seule opération de moulage, sans pose d'insert, tout en maîtrisant la répartition de la mousse et ce, en obtenant une très bonne finition.

A cet effet, selon l'invention, un procédé de fabrication d'une matelassure par introduction d'au moins deux couches de mousse de polyuréthanne dans un moule, la matelassure comprenant au moins une face de portage et une face support tournée à l'opposé de la face de portage et le moule possédant un fond et un couvercle qui correspondent aux formes des faces de ladite matelassure, le procédé comportant les étapes consistant à :
- introduire par pulvérisation une première composition de mousse souple au moins dans une partie centrale du fond du moule ;
- laisser s'expandre naturellement la première composition de mousse de manière à former une peau au contact de l'air ;
- introduire par injection une deuxième composition de mousse souple directement au contact de la peau formée par la première composition de mousse et refermer le moule ; et
- laisser s'expandre la deuxième composition de mousse de sorte que la mousse occupe tout le volume du moule.

Le procédé de fabrication suivant l'invention peut éventuellement comporter en outre une ou plusieurs des caractéristiques suivantes :
- la quantité de la première composition de mousse injectée est telle qu'après l'étape d'expansion, la peau obtenue est d'épaisseur sensiblement inférieure à l'épaisseur d'ensemble de la matelassure et est comprise entre 0,5 et 50 mm environ ;
- l'étape de pulvérisation consiste à pulvériser un mélange d'isocyanate et de polyol formulé sous une pression comprise entre 60 et 250 bars et une température comprise entre 20°C et 100°C ;
- le polyol formulé comprend un mélange d'eau variant de 1 à 5 parts, de catalyseur gel variant de 0 à 4 parts, de catalyseur gaz variant de 0 à 4 parts, d'ouvreur de cellules variant de 0 à 5 parts et de stabilisant variant de 0 à 2 parts ; et
- avant l'étape d'introduction de la première composition de mousse dans le moule, on positionne un revêtement d'apparence dans le fond du moule.

La présente invention a en outre pour objet une matelassure telle qu'obtenue par le procédé précité, dans laquelle la peau formée par la première composition de mousse est d'épaisseur sensiblement inférieure à l'épaisseur d'ensemble de la matelassure.

De préférence, la dureté de la peau est comprise entre 1 et 12 kPa et la dureté de la couche correspondant à la deuxième composition de mousse est comprise entre 2 et 15 kPa (mesurées suivant la méthode NFT 56-110).

De manière préférentielle encore, la souplesse de la deuxième composition de mousse est inférieure à la souplesse de la première composition de mousse.

La présente invention a encore pour objet un siège comprenant une telle matelassure.

Deux exemples de réalisation de l'invention vont maintenant être décrits en regard des dessins annexés, sur lesquels :
- la figure 1 est une vue en perspective d'un siège incorporant une matelassure de dossier et une matelassure d'assise obtenues selon le procédé suivant la présente invention ;
- la figure 2 est une vue en coupe du fond et du couvercle du moule utilisés dans le procédé suivant la présente invention ;
- la figure 3 est une vue en coupe du fond du moule lors de l'étape de pulvérisation ;
- la figure 4 est une vue en coupe du fond du moule lors de l'étape d'injection;
- la figure 5 est une vue en coupe du moule après injection ; et
- la figure 6 est une vue en coupe du fond du moule dans un deuxième mode de réalisation de la matelassure suivant l'invention.

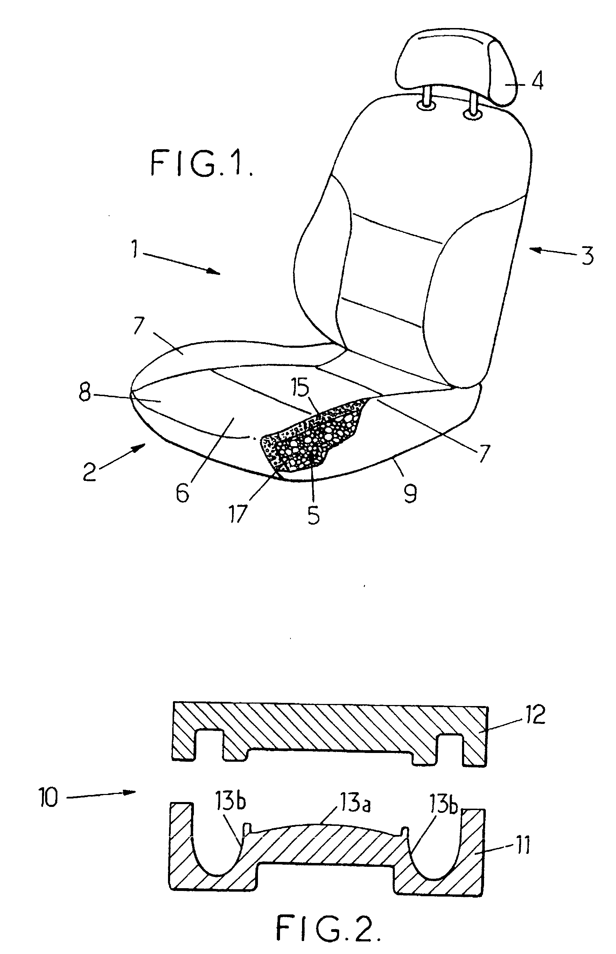

La figure 1 représente un exemple de siège 1 pour véhicule automobile. Ce siège est constitué de manière connue en soi d'une assise 2, d'un dossier 3 supporté par l'assise 2 et d'un appui-tête 4 surmontant le dossier. L'assise 2 et le dossier 3 possèdent chacun une matelassure 5 qui est munie d'une face avant de portage 8 destinée à assurer le confort d'un passager s'asseyant sur le siège et d'une face arrière de support 9 opposée à la face avant.

La matelassure 5 est par exemple constituée d'une partie centrale 6 et de bourrelets latéraux 7. Cette matelassure est obtenue par introduction de plusieurs couches de mousses de souplesses différentes dans un moule 10 tel que celui représenté aux figures 2 à 5.

Le moule 10 est constitué d'un fond 11 et d'un couvercle 12 dont les formes intérieures correspondent aux formes des faces avant 8 et arrière 9 de la matelassure 5. Le fond 11 possède notamment une partie centrale 13a de forme complémentaire à celle de la partie centrale 6 de la matelassure 5, ainsi que des évidements 13b de forme complémentaire aux bourrelets 7 à obtenir.

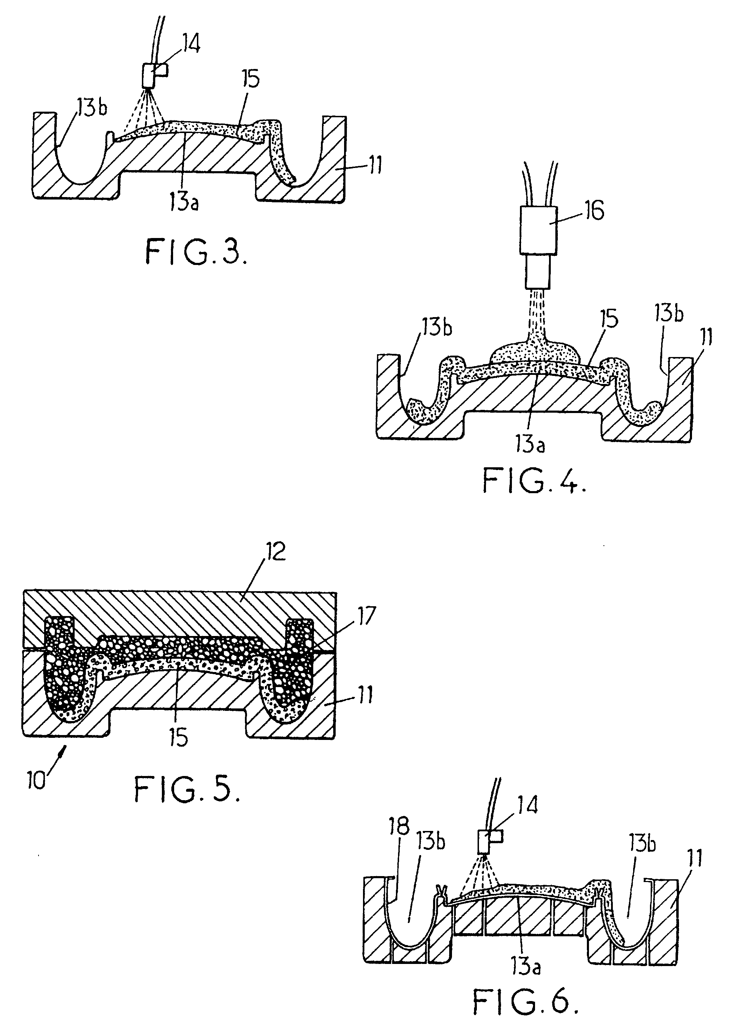

Le procédé suivant l'invention est plus particulièrement représenté aux figures 3 à 5. Il consiste à introduire successivement deux compositions de mousse de polyuréthanne dans le moule 10 sans utiliser d'insert supplémentaire, ni d'éléments articulés.

La première étape du procédé, représentée à la figure 3, consiste à pulvériser dans le fond 11 du moule 10, au moyen d'une buse 14, une première composition de mousse souple permettant d'obtenir une première couche de polyuréthanne souple 15.

La buse 14 appartient à une machine de pulvérisation d'un mélange de deux composants, sous une pression de l'ordre de 60 à 250 bars et à une température variant de 20° à 100°. La première composition de mousse consiste en un mélange d'isocyanate et de polyol formulé. Le polyol utilisé consiste en un mélange d'eau dont la quantité varie de 1 à 5 parts, de catalyseur sous forme de gel variant de 0 à 4 parts, d'un catalyseur sous forme de gaz variant de 0 à 4 parts, d'un ouvreur de cellule variant de 0 à 5 parts et d'un stabilisant variant de 0 à 2 parts.

Cette première composition est directement pulvérisée au contact du fond 11 du moule 10, sur la surface de la partie centrale 13a et une fraction de la surface des évidements 13b.

Le procédé consiste ensuite à laisser s'expandre à l'air libre la mousse ainsi injectée. Il se produit un moussage par réaction chimique entre l'isocyanate et le polyol formulé. Le temps d'expansion varie de 5 secondes à 2 minutes, tandis que la couche obtenue est d'épaisseur comprise entre 0,5 mm et 50 mm environ, possède une masse volumique variant de 20 kg/m³ à 90 kg/m³ et une dureté comprise entre 1 et 12 kPa (mesurée suivant la méthode NFT 56-110).

On obtient ainsi la formation d'une peau dont la souplesse est fonction du type et des proportions respectives du polyol et de l'isocyanate utilisés, ainsi que de la quantité d'eau et des catalyseurs employés. La peau ainsi formée est suffisamment souple pour procurer une sensation de confort à l'utilisateur du siège.

Une fois que le moussage de la première couche est terminé, on injecte ensuite une deuxième composition de mousse de polyuréthanne directement au contact de la peau 15 formée, dans le fond 11 du moule (figure 4), au moyen d'une buse d'injection 16. Puis on referme immédiatement le moule par apposition du couvercle 12. Dans le moule 10 ainsi rempli se produit la polymérisation de la deuxième composition de mousse pour obtenir une deuxième couche 17 de souplesse différente de celle de la peau 15 (figure 5). La couche obtenue possède une masse volumique variant de 20 kg/m³ à 90 kg/m³ et une dureté comprise entre 2 et 15 kPa (mesurée suivant la méthode NFT 56-110).

La deuxième couche 17 est d'une épaisseur sensiblement supérieure à celle de la peau 15 et d'une souplesse de préférence inférieure à celle de la première couche de sorte que l'on obtient une matelassure 5 qui se caractérise par un bon confort d'approche tout en assurant un bon maintien du passager s'asseyant dans un siège équipé d'une telle matelassure.

Dès le démoulage, la matelassure 5 possède un aspect de surface sans défaut.

Par ailleurs, dans un deuxième mode de réalisation représenté à la figure 6, il est possible, préalablement à la pulvérisation de la première composition de mousse, de placer dans le fond 11 du moule, un revêtement d'apparence 18, par exemple un tissu foamé. La première composition pulvérisée présente l'avantage de ne nécessiter qu'un simple revêtement d'apparence, dans la mesure où cette composition ne pénètre pas naturellement dans celui-ci.

## Revendications

1. Procédé de fabrication d'une matelassure (5), notamment pour siège (1) de véhicule automobile, par introduction d'au moins deux compositions de mousse de polyuréthanne dans un moule (10), la matelassure (5) comprenant au moins une face de portage (8) et une face support (9) tournée à l'opposé de la face de portage (8), et le moule (10) possédant un fond (11) et un couvercle (12) qui correspondent aux formes des faces (8, 9) de ladite matelassure (5), le procédé comportant les étapes consistant à :
- introduire par pulvérisation une première composition de mousse souple au moins dans une partie centrale (13a) du fond (11) du moule (10) ;
- laisser s'expandre naturellement la première composition de mousse de manière à former une peau (15) au contact de l'air ;
- introduire par injection une deuxième composition de mousse souple directement au contact de la peau (15) formée par la première composition de mousse et refermer le moule (10) ; et
- laisser s'expandre la deuxième composition de mousse de sorte que la mousse occupe tout le volume du moule (10).

2. Procédé selon la revendication 1, dans lequel la quantité de la première composition de mousse injectée est telle qu'après l'étape d'expansion, la peau obtenue est d'épaisseur sensiblement inférieure à l'épaisseur d'ensemble de la matelassure et est comprise entre 0,5 et 50 mm environ.

3. Procédé selon la revendication 1 ou 2, dans lequel l'étape de pulvérisation consiste à pulvériser un mélange d'isocyanate et de polyol formulé sous une pression comprise entre 60 et 250 bars et une température comprise entre 20°C et 100°C.

4. Procédé selon la revendication 3, dans lequel le polyol formulé comprend un mélange d'eau variant de 1 à 5 parts, de catalyseur gel variant de 0 à 4 parts, de catalyseur gaz variant de 0 à 4 parts, d'ouvreur de cellules variant de 0 à 5 parts et de stabilisant variant de 0 à 2 parts.

5. Procédé selon l'une quelconque des revendications 1 à 4, dans lequel avant l'étape d'introduction de la première composition de mousse dans le moule (10), on positionne un revêtement d'apparence (18) dans le fond (11) du moule (10).

6. Matelassure telle qu'obtenue selon l'une quelconque des revendications 1 à 5, dans laquelle la peau (15) formée par la première composition de mousse est d'épaisseur sensiblement inférieure à l'épaisseur d'ensemble de la matelassure (5).

7. Matelassure selon la revendication 6, dans laquelle la dureté de la peau est comprise entre 1 et 12 kPa et la dureté de la couche correspondant à la deuxième composition de mousse est comprise entre 2 et 15 kPa (mesurées suivant la méthode NFT 56-110).

8. Matelassure selon la revendication 7, dans laquelle la souplesse de la deuxième composition de mousse est inférieure à la souplesse de la première composition de mousse.

9. Siège comprenant une matelassure obtenue selon la revendication 8.

## Claims

1. A method of manufacturing a filling (5), in particular for a seat (1) of a motor vehicle, by introducing at least two polyurethane foam compounds into a mould (10), the filling (5) comprising at least a bearing face (8) and a support face (9) opposing the bearing face (8), and the mould (10) having a base (11) and a cover (12) which match the shapes of the faces (8,9) of said filling (5), the method comprising steps consisting in:
- introducing by a spraying process a first flexible foam compound at least into a central part (13a) of the base (11) of the mould (10);
- allowing the first foam compound to expand naturally to form a skin (15) in contact with the air;
- introducing by an injection process a second flexible foam compound directly in contact with the skin (15) formed by the first foam compound and closing the mould (10); and
- allowing the second foam compound to expand so that the foam occupies the entire volume of the mould (10).

2. A method according to claim 1, in which the quantity of the first foam compound is injected such that the skin obtained after the expansion step is of a substantially smaller thickness than the overall thickness of the filling and is within the range of between approximately 0.5 and 50 mm.

3. A method according to claim 1 or 2, in which the spraying step consists in spraying a formulated mixture of isocyanate and polyol at a pressure ranging between 60 and 250 bar and at a temperature ranging between 20°C and 100°C.

4. A method according to claim 3, in which the formulated polyol comprises a mixture of water varying from 1 to 5 parts, a gel catalyst ranging from 0 to 4 parts, a gas catalyst ranging from 0 to 4 parts, cell opener varying from 0 to 5 parts and stabilizer varying from 0 to 2 parts.

5. A method according to any one of claims 1 to 4 wherein, prior to the step at which the first foam compound is introduced into the mould (10), a finishing cover (18) is placed in the base (11) of the mould (10).

6. A filling as obtained according to any one of claims 1 to 5, in which the skin (15) formed by the first foam compound is of a substantially smaller thickness than the overall thickness of the filling (5).

7. A filling according to claim 6, in which the hardness of the skin is within a range of between 1 and 12 kPa and the hardness of the layer corresponding to the second foam composition is within a range between 2 and 15 kPa (measured in accordance with the NFT 56-110 method).

8. A filling according to claim 7, in which the flexibility of the second foam compound is lower than the flexibility of the first foam compound.

9. A seat comprising a filling obtained according to claim 8.

## Patentansprüche

1. Verfahren zur Herstellung einer Polsterung (5), insbesondere für einen Fahrzeugsitz (1), durch Einbringen von mindestens zwei Zusammensetzungen aus Polyurethan-Schaum in eine Form (10), wobei die Polsterung (5) mindestens eine Sitzfläche (8) und eine Trägerfläche (9) aufweist, die der Sitzfläche (8) gegenüberliegt, und wobei die Form (10) einen Boden (11) und einen Deckel (12) aufweist, die den Formen der Flächen (8, 9) der Polsterung (5) entsprechen, wobei das Verfahren die folgenden Schritte umfaßt:
- eine erste Zusammensetzung von Weichschaum wird zumindest in einen zentralen Bereich (13a) des Bodens (11) der Form (10) durch Sprühen eingebracht;
- die erste Schaumzusammensetzung wird sich von selbst ausdehnen gelassen, so daß sich beim Kontakt mit der Luft eine Haut (15) bildet;
- eine zweite Zusammensetzung von Weichschaum wird durch Spritzen direkt in Kontakt mit der von der ersten Schaumzusammensetzung gebildeten Haut (15) gebracht und die Form (10) wird geschlossen; und
- die zweite Schaumzusammensetzung wird sich so ausdehnen gelassen, daß der Schaum das ganze Volumen der Form (10) ausfüllt.

2. Verfahren nach Anspruch 1, wobei die Menge der ersten eingesprühten Schaumzusammensetzung so groß ist, daß die erhaltene Haut nach dem Expansionsschritt eine Dicke besitzt, die wesentlich geringer als die Dicke der gesamten Polsterung ist und etwa 0,5 und 50 mm beträgt.

3. Verfahren nach Anspruch 1 oder 2, wobei der Sprühschritt darin besteht, ein Gemisch eines Isocyanats und einer Polyol-Formulierung unter einem Druck von 60 bis 250 bar und einer Temperatur von 20°C bis 100°C zu sprühen.

4. Verfahren nach Anspruch 3, wobei die Polyol-Formulierung ein Gemisch von 1 bis 5 Teilen Wasser, 0 bis 4 Teilen Katalysator in Gelform, 0 bis 4 Teilen Katalysator in Form von Gas, 0 bis 5 Teilen Zellöffner und 0 bis 2 Teilen Stabilisierungsmittel enthält.

5. Verfahren nach einem der Ansprüche 1 bis 4, wobei auf dem Boden (11) der Form (10) ein sichtbarer Überzug (18) plaziert wird, bevor die erste Schaumzusammensetzung in die Form (10) gegeben wird.

6. Polsterung erhalten nach einem der Ansprüche 1 bis 5, wobei die von der ersten Schaumzusammensetzung gebildete Haut (15) eine Dicke besitzt, die wesentlich geringer als die Dicke der gesamten Polsterung (5) ist.

7. Polsterung nach Anspruch 6, wobei die Härte der Haut im Bereich von 1 bis 12 kPa liegt und die Härte der Schicht aus der zweiten Zusammensetzung im Bereich von 2 bis 15 kPa liegt (wobei die Härte nach dem Verfahren gemäß NFT 56-110 ermittelt wird).

8. Polsterung nach Anspruch 7, wobei die Flexibilität der zweiten Schaumzusammensetzung unter der Flexibilität der ersten Schaumzusammensetzung liegt.

9. Sitz mit einer nach Anspruch 8 hergestellten Polsterung.
